# EUROPÄISCHE PATENTSCHRIFT

(11) **EP 3 036 408 B1**
(45) Veröffentlichungstag und Bekanntmachung des Hinweises auf die Patenterteilung: **27.11.2019**
(21) Anmeldenummer: 14766934.5
(22) Anmeldetag: 05.09.2014
(51) Int. Cl.: F01D 21/00, F01D 21/14, G01L 1/12, G01L 25/00

(54) **VERFAHREN ZUM BETREIBEN EINER STRÖMUNGSMASCHINE MIT ÜBERLASTSCHUTZ UND STRÖMUNGSMASCHINE MIT EINER VORRICHTUNG ZUR DURCHFÜHRUNG DES VERFAHRENS**
METHOD FOR OPERATING A TURBO-MACHINE HAVING OVERLOAD PROTECTION AND TURBO-MACHINE COMPRISING A DEVICE FOR CARRYING OUT SAID METHOD
PROCÉDÉ D'EXPLOITATION D'UNE TURBOMACHINE AVEC PROTECTION CONTRE LES SURCHARGES ET TURBOMACHINE ÉQUIPÉE D'UN DISPOSITIF PERMETTANT LA MISE EN OEUVRE DE CE PROCÉDÉ

(30) Priorität: 30.09.2013 DE 102013219752
(43) Veröffentlichungstag der Anmeldung: 29.06.2016
(73) Patentinhaber: Siemens Aktiengesellschaft, 80333 München (DE)
(72) Erfinder: BRUMMEL, Hans-Gerd, 13465 Berlin (DE); GRIESHABER, Dirk, 46485 Wesel (DE); MAIER, Carl Udo, 70499 Stuttgart (DE); PFEIFER, Uwe, 12557 Berlin (DE); DE BRUYN, Huub, 9451 BM Rolde (NL)
(86) Internationale Anmeldenummer: PCT/EP2014/068893
(87) Internationale Veröffentlichungsnummer: WO 2015/043914

(56) Entgegenhaltungen:
- EP-A1- 2 022 945
- EP-A1- 2 119 917
- WO-A1-01/13082
- DE-A1-102007 029 573

## Beschreibung

Verfahren zum Betreiben einer Strömungsmaschine mit Überlastschutz und Strömungsmaschine mit dem Überlastschutz Die Erfindung betrifft ein Verfahren zum Betreiben einer Strömungsmaschine mit Überlastschutz. Die Strömungsmaschine weist mindestens eine Strömungsmaschinen-Stufe auf. Daneben wird eine Strömungsmaschine mit Überlastschutz angegeben.

Bei einer Strömungsmaschine wird Energie durch ein strömendes Fluid (Gas oder Flüssigkeit) übertragen. Die Energieübertragung erfolgt dabei über ein Laufrad mit Rotations-Welle (Antriebs- oder Abtriebs-Welle). An der Rotations-Welle sind Rotorblätter, Flügel oder Schaufeln angeordnet, die derart geformt sind, dass sich im Fluid-Strom (Volumenstrom) eine Druckdifferenz (Δp) zwischen Vorderseite und Rückseite des Laufrads ergibt.

Heute gängige Überlastschutzmechanismen bei Strömungsmaschinen, beispielsweise einem Turboverdichter (Turbokompressor), werden in der Regel über den Antrieb der Strömungsmaschine sichergestellt. Eine Leistung eines die Rotations-Welle der Strömungsmaschinen-Stufe antreibenden Motors wird über dessen Anfahrstrom geregelt bzw. begrenzt. Derartige Verfahren sind statisch und wenig flexibel.

Alternativen dazu sind beispielsweise in den Dokumenten EP 2 119 917 A1 und EP 2 022 945 A1 zu finden. In beiden Fällen geht es darum, den Überlastschutz durch eine Verbindung zur zu überprüfenden Rotations-Welle sicherzustellen. Dabei findet ein berührungsloses Messen des Dreh-Moments der Rotations-Welle statt.

Das Dokument WO 01/13082 A1 beschäftigt sich mit der Übertragung der Torsionsspannung, die im Betrieb einer Rotations-Welle auf eine mit der Rotations-Welle verbundenen Scheibe basierend auf dem magneto-elastischen Effekts übertragen wird.

Aufgabe der vorliegenden Erfindung ist es, aufzuzeigen, wie in einer Strömungsmaschine ein wirkungsvoller Überlastschutz flexibel und einfach integriert werden kann.

Zur Lösung der Aufgabe wird ein Verfahren zum Betreiben einer Strömungsmaschine mit mindestens einer Strömungsmaschinen-Stufe angegeben, die mindestens eine Rotations-Welle aufweist, wobei mit dem Verfahren ein Überlastschutz der Rotations-Welle vorgesehen ist und zum Überlastschutz der Rotations-Welle ein Erfassen einer Torsionsspannung der Rotations-Welle im Betrieb der Rotations-Welle durchgeführt wird. Zum Erfassen der Torsionsspannung der Rotations-Welle wird ein Messen eines Drehmoments der Rotations-Welle durchgeführt. Dabei wird zum Messen des Drehmoments der Rotations-Welle ein berührungsloses Mess-Verfahren durchgeführt. Das Verfahren ist dadurch gekennzeichnet, dass das berührungslose Mess-Verfahren mit Hilfe eines magneto-elastischen Drehmoment-Sensors durchgeführt wird und zum Überlastschutz der Rotations-Welle folgende Verfahrensschritte durchgeführt werden: a) Vorhersagen einer Entwicklung des Drehmoments der Rotations-Welle anhand des gemessenen Drehmoments der Rotations-Welle und b) Änderung mindestens eines Betriebsparameters der Strömungsmaschinen-Stufe anhand des Vorhersagens.

Zur Lösung der Aufgabe wird auch eine Strömungsmaschine mit mindestens einer Strömungsmaschinen-Stufe angegeben, die mindestens eine Rotations-Welle aufweist. Die StrömungsMaschine weist mindestens eine Vorrichtung zum Erfassen einer Torsionsspannung der Rotations-Welle im Betrieb der Rotations-Welle auf. Die Vorrichtung zum Erfassen der Torsionsspannung der Rotationswelle weist einen berührungslosen Drehmoment-Sensor auf, der an der Rotations-Welle angeordnet ist. Die Strömungsmaschine ist dadurch gekennzeichnet, dass die Strömungsmaschine zur Durchführung des hier beschriebenen Verfahrens geeignet und der berührungslose Drehmoment-Sensor ein magneto-elastischer Drehmoment-Sensor ist. Anhand des gemessenen Drehmoments wird die zeitliche Entwicklung des Drehmoments abgeschätzt. So wird beispielsweise abgeschätzt, ob das Drehmoment einen für die Rotations-Welle zulässigen Grenzwert Mₗᵢₘ übersteigen wird.

Die Strömungsmaschine ist beispielsweise ein Turboverdichter, der mehrere Verdichter-Stufen (Strömungsmaschinen-Stufen) aufweist.

Das Verfahren kann für eine einstufige Strömungsmaschine angewendet werden. Die Strömungsmaschine verfügt lediglich über eine Strömungsmaschinen-Stufe. In einer besonderen Ausgestaltung wird als Strömungsmaschine eine mehrstufige Strömungsmaschine mit mindestens einer weiteren Strömungsmaschinen-Stufe verwendet, die mindestens eine weitere Rotations-Welle aufweist. Dabei ist mit dem Verfahren ein Überlastschutz der weiteren Rotations-Welle vorgesehen und zum Überlastschutz der weiteren Rotations-Welle wird ein Erfassen einer weiteren Torsionsspannung der weiteren Rotations-Welle im Betrieb der weiteren Rotations-Welle durchgeführt. Die Strömungsmaschine weist mindestens eine weitere Strömungsmaschinen-Stufe mit mindestens einer weiteren Rotations-Welle auf. Dabei sind beispielsweise die Rotations-Welle und die weitere Rotations-Welle identisch. Es gibt lediglich eine gemeinsame Rotations-Welle der Strömungsmaschinen-Stufen. Beispielsweise ist eine derartige mehrstufige Strömungsmaschine ein mehrstufiger Turboverdichter.

Die grundlegende Idee der Erfindung besteht darin, im Betrieb der Strömungsmaschine das an der Rotations-Welle anliegende Torsions-Drehmoment (und/oder das an der weiteren Rotations-Welle anliegende weitere Torsions-Drehmoment) zu ermitteln. Das ermittelte Torsions-Drehmoment wird für den Überlastschutz der Rotations-Welle verwendet. Dabei wird vorzugsweise im Fall von mehreren Rotations-Wellen jede der Rotations-Wellen separat behandelt. Die Verfahren zum Erfassen der Torsionsspannung und das Erfassen der weiteren Torsionsspannung werden unabhängig voneinander durchgeführt.

Gemäß einer besonderen Ausgestaltung wird zum Erfassen der Torsionsspannung der weiteren Rotations-Welle ein Messen eines weiteren Drehmoments der weiteren Rotations-Welle durchgeführt.

In einer besonderen Ausgestaltung werden zum Überlastschutz der weiteren Rotations-Welle mindestens der weiteren Strömungsmaschinen-Stufe folgende weiteren Verfahrensschritte durchgeführt:
a') Weiteres Vorhersagen einer Entwicklung des Drehmoments der Rotations-Welle anhand des gemessenen Drehmoments der Rotations-Welle und
b') Weitere Änderung mindestens eines weiteren Betriebsparameters der weiteren Strömungsmaschinen-Stufe anhand des weiteren Vorhersagens.

Die Messung des jeweiligen Drehmoments erfolgt dabei vorzugsweise kontinuierlich. Dadurch lässt sich eine zeitliche Veränderung des Drehmoments erfassen. Auf der Grundlage des erfassten Drehmoments bzw. der zeitlichen Veränderung des Drehmoments wird die Entwicklung des Drehmoments abgeschätzt. Es wird eine Vorhersage (Prognose) für die Entwicklung des Drehmoments erstellt. Die Entwicklung des Drehmoments wird prognostiziert bzw. extrapoliert. Anhand der Prognose wird abgeschätzt, ob der zulässige Grenzwert Mₗᵢₘ für das Drehmoment überschritten wird. In diesem Fall wird gegengesteuert. Mindestens ein Betriebsparameter der Strömungsmaschinen-Stufe wird derart verändert, dass der Grenzwert Mₗᵢₘ für die Rotations-Welle nicht überschritten, sondern eingehalten wird.

Beispielsweise wird basierend auf der Prognose der Volumenstrom des Fluids verändert, mit dem die Strömungsmaschine bzw. die Strömungsmaschinen-Stufe betrieben wird. Der Betriebsparameter der Strömungsmaschinen-Stufe ist der Volumenstrom. Denkbar ist auch basierend auf der Prognose eine Änderung einer Drehzahl, mit der die Rotations-Welle der Strömungsmaschinen-Stufe betrieben wird. So könnte die Strömungsmaschine bzw. die Strömungsmaschinen-Stufe herzuntergefahren oder ausgeschaltet werden (Drehzahl 0). Der Betriebsparameter ist die Drehzahl der Rotations-Welle der Strömungsmaschinen-Stufe. Andere Betriebsparameter sind beispielsweise eine Einstellung der Ausrichtung von Leitblechen für das strömende Fluid.

In einer besonderen Ausgestaltung ist an der weiteren Rotations-Welle ein weiterer Drehmoment-Sensor zum Messen des weiteren Drehmoments der weiteren Rotations-Welle angeordnet. Das Drehmoment und das weitere Drehmoment und eventuell deren zeitliche Änderungen können unabhängig voneinander gemessen werden.

Zumindest einer der Drehmoment-Sensoren ist vorzugsweise unmittelbar an der jeweiligen Rotations-Welle angeordnet. Mit Hilfe des Drehmoment-Sensors wird das Drehmoment an der Rotations-Welle direkt gemessen. Beispielsweise weist ein Verdichter mehrere Verdichter-Stufen mit jeweils einem Verdichter-Gehäuse auf. Für jedes der Verdichter-Gehäuse wird separat das Drehmoment als Drehmoment-Differenz zwischen Antriebs- und Abtriebs-Welle gemessen.

Vorzugsweise wird zum Messen des weiteren Drehmoments der weiteren Rotations-Welle ein weiteres berührungsloses Mess-Verfahren durchgeführt. Der weitere Drehmoment-Sensor ist ein weiterer berührungsloser Drehmoment-Sensor.

Als weiteres berührungsloses Mess-Verfahren wird beispielsweise ein optisches Mess-Verfahren durchgeführt. Vorzugsweise wird das weitere berührungslose Mess-Verfahren mit Hilfe eines weiteren magneto-elastischen Drehmoment-Sensors durchgeführt. Der weitere berührungslose Drehmoment-Sensor ist ein weiterer magneto-elastischer Drehmoment-Sensor.

Magnetoelastizität basiert auf einer Änderung der magnetischen Permeabilität eines ferroelektrischen Materials aufgrund von mechanischen Kräften, die auf das ferromagnetische Material einwirken. Durch die Verwendung von magneto-elastischen Drehmoment-Sensoren ist es möglich, im Betrieb der Strömungsmaschine direkt Drehmomente zu messen.

Bisher war die direkte Messung des Drehmoments bei einem Verdichter im Betrieb nur mit erheblichem Aufwand möglich, z.B. durch auf der Rotations-Welle aufgebrachte Dehnungsmess-Streifen und eine Telemetrie zur Weiterleitung der aufgenommenen Signale der rotierenden Rotations-Welle. Durch den Einsatz eines präzisen magneto-elastischen Drehmoment-Sensors, der keinerlei Kontakt zur Rotations-Welle hat und auch keine Behandlung der Rotations-Welle voraussetzt (z.B. Aufbringen von Dehnungsmess-Streifen auf der Rotations-Welle), besteht die Möglichkeit, das beschriebene Verfahren auf einfache Weise direkt einzusetzen.

Im Hinblick auf das magneto-elastische Mess-Prinzip ist es besonders vorteilhaft, eine die Rotations-Welle der Strömungsmaschinen-Stufe zu verwenden, die komplett aus ferroelektrischem Material besteht. Denkbar ist aber auch, dass die Rotations-Welle lediglich teilweise aus ferroelektrischem Material besteht. Beispielsweise besteht eine ferroelektrische Beschichtung der Rotations-Welle, die fest mit der Rotations-Welle verbunden ist, aus ferroelektrischem Material. Dabei wird sichergestellt, dass durch die Verbindung der ferroelektrischen Beschichtung und der Rotations-Welle das Drehmoment der Rotations-Welle auf die ferroelektrische Beschichtung übertragen werden kann. Durch die Übertragung des Drehmoments ändert sich die Permeabilität des ferroelektrischen Materials der ferroelektrischen Beschichtung. Es resultiert ein detektierbares Signal, das einen Rückschluss auf das an der Rotations-Welle anliegende Drehmoment zulässt.

Das beschriebene Verfahren ist für alle Arten von Strömungsmaschinen einsetzbar. Gemäß einer besonderen Ausgestaltung wird die Strömungsmaschine aus der Gruppe Gasturbine, Dampfturbine, Turbolader, Pumpe, Verdichter und Hydroturbine ausgewählt. Vorzugsweise ist die Strömungsmaschine ein Verdichter, insbesondere ein Turboverdichter. Unter Turboverdichter werden dabei sowohl mechanisch angetriebene Kompressoren im Öl- und Gasbereich als auch kombinierte Maschinen zur Energieumwandlung wie Gasturbinen verstanden.

Durch eine hochauflösende Messung des Drehmoments bzw. der Drehmomente lassen sich frühzeitig die Überlastungen extrapolieren und vorhersagen. Dies gilt insbesondere bei hinreichend kleinen zeitlichen Veränderungen. Ein solcher dynamischer Prozess wird dazu genutzt, ein Überschreiten oder Überschwingen der Überlastungsgrenze zu verhindern.

Anhand mehrerer Ausführungsbeispiele und der dazugehörigen Figuren wird die Erfindung im Folgenden näher beschrieben. Die Figuren sind schematisch und stellen keine maßstabsgetreuen Abbildungen dar.
Figur 1 zeigt einen einstufigen Einwellen-Verdichter.
Figur 2 zeigt einen mehrstufigen Einwellen-Verdichter.
Figur 3 zeigt einen Getriebeverdichter.
Figur 4 zeigt eine prognostizierte Entwicklung eines Drehmoments anhand gemessener Drehmomente.

Gegeben ist eine Strömungsmaschine 1 in Form eines Turboverdichters mit mindestens einer Verdichter-Stufe (Strömungsmaschinen-Stufe) 11. Die Verdichter-Stufe 11 weist eine Rotations-Welle 111 auf.

An der Rotations-Welle 111 ist ein Drehmoment-Sensor 112 zum Messen der Drehmomente der Rotations-Welle angeordnet. Der Drehmoment-Sensor 112 ist ein magneto-elastischer Drehmoment-Sensor.

Der Turboverdichter 1 weist eine Vorrichtung 100 zur Durchführung eines Verfahrens zum Betreiben des Turboverdichters 1 wobei
- mit dem Verfahren ein Überlastschutz der Rotations-Welle vorgesehen ist und
- zum Überlastschutz der Rotations-Welle ein Erfassen einer Torsionsspannung der Rotations-Welle im Betrieb der Rotations-Welle durchgeführt wird.

Zum Messen des Drehmoments mit Hilfe des magneto-elastischen Drehmoment-Sensors 112 besteht die Rotations-Welle 111 aus ferroelektrischem Material. In einem alternativen Ausführungsbeispiel weist die Rotations-Welle 111 eine fest mit der Rotations-Welle 111 verbundene ferroelektrische Beschichtung auf.

In Abhängigkeit von der zeitlichen Änderung des Drehmoments wird mindestens ein Betriebsparameter der Verdichter-Stufe 11 variiert. Dazu wird eine Pump-Regelung 118 eingesetzt. Der Betriebsparameter ist die Drehzahl 115 der Rotations-Welle 111, die über die Ansteuerung des Motors 13 veränderbar ist, und/oder der Volumenstrom des Fluids, der über die Volumenstrom-Messblende 114 veränderbar ist.

### Beispiel 1:

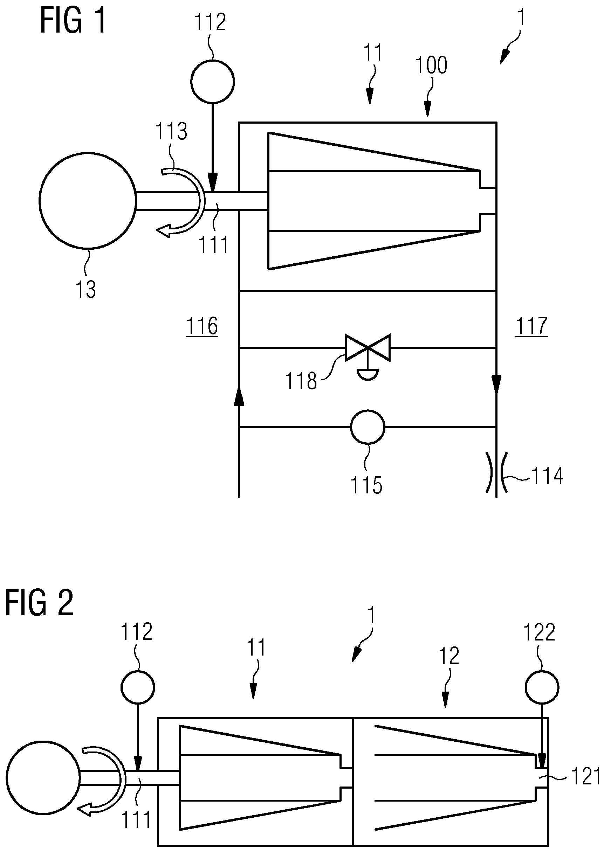

Der Turboverdichter 1 ist ein (axial oder radial betriebener) Einwellen-Verdichter (Verdichter mit nur einer Rotations-Welle) mit nur einer Verdichter-Stufe (Figur 1). Die Vorderseite der Verdichter-Stufe ist mit dem Bezugszeichen 116 und die Rückseite der Verdichter-Stufe mit 117 gekennzeichnet.

### Beispiel 2:

Im Unterschied zum Beispiel 1 ist der Turboverdichter 1 ein mehrstufiger Einwellen-Verdichter (Figur 2). Der Turboverdichter 1 verfügt über eine Turboverdichter-Stufe 11 und über mindestens eine weitere Turboverdichter-Stufe 12.

Die Rotations-Welle 111 der Verdichter-Stufe 11 und die weitere Rotations-Welle 121 der weiteren Verdichter-Stufe 12 bilden eine gemeinsame Rotations-Welle.

An der weiteren Verdichter-Stufe 12 ist ein weiterer magneto-elastischer Drehmoment-Sensor 122 angeordnet. Mit Hilfe des weiteren Drehmoment-Sensors 122 wird das weitere Drehmoment im Bereich der weiteren Rotations-Welle 121 abgegriffen.

Der Drehmoment-Sensor 112 und der weitere Drehmoment-Sensor 122 werden unabhängig voneinander betrieben.

### Beispiel 3:

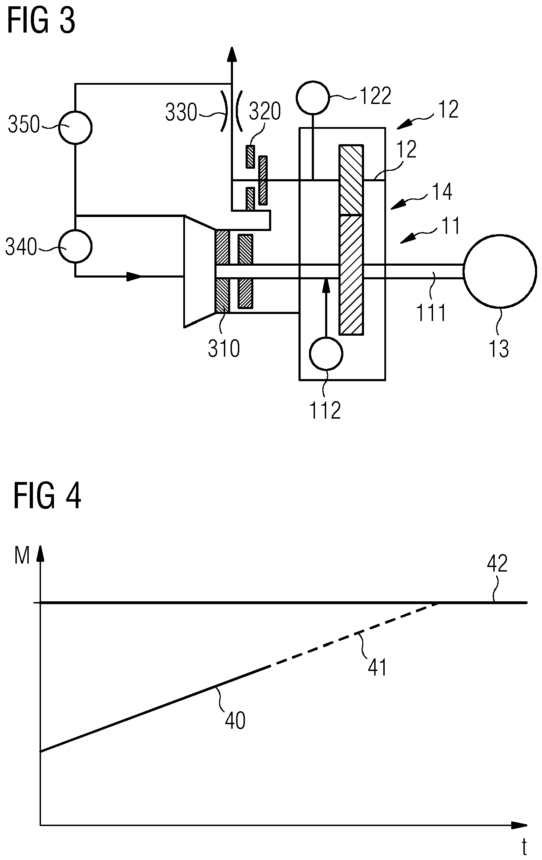

Der Turboverdichter 1 ist ein Getriebeverdichter (Figur 3). Die Verdichter-Stufe 11 und die weitere Verdichter-Stufe 12 sind über ein Getriebe 14 miteinander verbunden. Über den Motor 13 wird die Rotations-Welle 111 angetrieben. Über das Getriebe 14 ist die weitere Rotations-Welle 12 an die Rotations-Welle 111 angekoppelt.

Das Drehmoment der Rotations-Welle 11 wird über den Drehmoment-Sensor 112 und das weitere Drehmoment der weiteren Rotations-Welle 12 über den weiteren Drehmoment-Sensor 122 gemessen.

Über die verstellbare Eintrittsleitapparatur (ELA) 310 und die verstellbare Austrittsleitapparatur (ALA) 320 wird das zu verdichtende Fluid in den Getriebeverdichter eingebracht bzw. das verdichtete Fluid aus dem Getriebeverdichter wieder entfernt.

Weitere Bestandteile sind eine Volumenstrom-Messblende 330 sowie Vorrichtungen zur Messung der an den einzelnen Verdichter-Stufen 11 und 12 anliegenden Druckdifferenzen 340 und 350.

Mit Figur 4 ist angedeutet, wie basierend auf den gemessenen Drehmomenten 40 die fortschreitende Entwicklung des Drehmoments 41 prognostiziert wird. Mit der Prognose kann abgeschätzt werden, ob und wenn ja, wann ein bestimmter Drehmoment-Grenzwert Mₗᵢₘ (42) erreicht wird. Dieser Grenzwert kann ein Alarmwert sein und als Begrenzungs-Signal fungieren. Basierend auf der Prognose des Erreichens des Alarmwerts 41 würden Betriebsparameter des Turboverdichters 1 bzw. dessen Verdichter-Stufen derart geändert werde, dass der Alarmwert nicht erreicht wird.

In einer alternativen Ausgestaltung fungiert der Alarmwert 41 als Abschaltsignal: Das prognostizierte Erreichen des Alarmwerts führt zum Abschalten des Turboverdichters 1.

## Patentansprüche

1. Verfahren zum Betreiben einer Strömungsmaschine (1) mit mindestens einer Strömungsmaschinen-Stufe (11), die mindestens eine Rotations-Welle (111) aufweist, wobei
- mit dem Verfahren ein Überlastschutz der Rotations-Welle vorgesehen ist,
- zum Überlastschutz der Rotations-Welle ein Erfassen einer Torsionsspannung der Rotations-Welle im Betrieb der Rotations-Welle durchgeführt wird,
- zum Erfassen der Torsionsspannung der Rotations-Welle (111) ein Messen eines Drehmoments der Rotations-Welle (111) durchgeführt wird und
- zum Messen des Drehmoments der Rotations-Welle (111) ein berührungsloses Mess-Verfahren durchgeführt wird,
**dadurch gekennzeichnet, dass**
- das berührungslose Mess-Verfahren mit Hilfe mindestens eines magneto-elastischen Drehmoment-Sensors (121) durchgeführt wird. und- zum Überlastschutz der Rotations-Welle (111) folgende Verfahrensschritte durchgeführt werden:
a) Vorhersagen einer Entwicklung des Drehmoments der Rotations-Welle (111) anhand des gemessenen Drehmoments der Rotations-Welle (111) und
b) Änderung mindestens eines Betriebsparameters der Strömungsmaschinen-Stufe (11) anhand des Vorhersagens.

2. Verfahren nach Anspruch 1, wobei als Strömungsmaschine (1)
- eine mehrstufige Strömungsmaschine mit mindestens einer weiteren Strömungsmaschinen-Stufe (12) verwendet wird, die mindestens eine weitere Rotations-Welle (121) aufweist,
- mit dem Verfahren ein Überlastschutz der weiteren Rotations-Welle vorgesehen ist und
- zum Überlastschutz der weiteren Rotations-Welle ein Erfassen einer weiteren Torsionsspannung der weiteren Rotations-Welle im Betrieb der weiteren Rotations-Welle durchgeführt wird.

3. Verfahren nach Anspruch 1 oder 2, wobei zum Erfassen der Torsionsspannung der weiteren Rotations-Welle (121) ein Messen eines weiteren Drehmoments der weiteren Rotations-Welle (121) durchgeführt werden.

4. Verfahren nach Anspruch 3, wobei zum Überlastschutz der weiteren Rotations-Welle (121) der weiteren Strömungsmaschinen-Stufen (12) folgende weiteren Verfahrensschritte durchgeführt werden:
a') Weiteres Vorhersagen einer Entwicklung des weiteren Drehmoments der weiteren Rotations-Welle (111) anhand des gemessenen weiteren Drehmoments der weiteren Rotations-Welle (121) und
b') Weiteres Änderung mindestens eines weiteren Betriebsparameters der weiteren Strömungsmaschinen-Stufe (12) anhand des weiteren Vorhersagens.

5. Verfahren nach einem der Ansprüche 1 bis 4, wobei als Betriebsparameter und/oder als weiterer Betriebsparamater ein an der Strömungsmaschinen-Stufe anliegender Volumenstrom eines Fluids, mit dem die Strömungsmaschinen-Stufe betrieben wird, und/oder eine Drehzahl verwendet wird, mit der die Rotations-Welle der Strömungsmaschinen-Stufe angetrieben wird.

6. Verfahren nach einem der Ansprüche 1 bis 5, wobei die Strömungsmaschine (1) aus der Gruppe Gasturbine, Dampfturbine, Turbolader, Pumpe, Verdichter und Hydroturbine ausgewählt wird.

7. Strömungsmaschine (1) mit mindestens einer Strömungsmaschinen-Stufe (11), die mindestens eine Rotations-Welle (111) aufweist, wobei
- die Strömungsmaschine mindestens eine Vorrichtung zum Erfassen einer Torsionsspannung der Rotations-Welle im Betrieb der Rotations-Welle aufweist und
- die Vorrichtung zum Erfassen der Torsionsspannung der Rotationswelle einen berührungslosen Drehmoment-Sensor aufweist, der an der Rotations-Welle (111) angeordnet ist, **dadurch gekennzeichnet, dass**
- die Strömungsmaschine (1) zur Durchführung des Verfahrens nach einem der Ansprüche 1 bis 6 geeignet ist und
- der berührungslose Drehmoment-Sensor ein magneto-elastischer Drehmoment-Sensor ist.

8. Strömungsmaschine nach Anspruch 7, wobei die Strömungsmaschine (1) mindestens eine weitere Strömungsmaschinen-Stufe (12) mit mindestens einer weiteren Rotations-Welle (121) aufweist.

9. Strömungsmaschine nach Anspruch 8, wobei an der weiteren Rotations-Welle (121) ein weiterer Drehmoment-Sensor (122) zum Messen des weiteren Drehmoments der weiteren Rotations-Welle (121) angeordnet ist.-

10. Strömungsmaschine nach Anspruch 9, wobei der weitere Drehmoment-Sensor (122) ein weiterer berührungsloser Drehmoment-Sensor ist und - der weitere berührungslose Drehmoment-Sensor ein weiterer magneto-elastischer Drehmoment-Sensor ist.

11. Strömungsmaschine nach einem der Ansprüche 8 bis 10, wobei die Strömungsmaschine (1) aus der Gruppe Gasturbine, Dampfturbine, Turbolader, Pumpe, Verdichter und Hydroturbine ausgewählt ist.

## Claims

1. Method for operating a turbomachine (1) having at least one turbomachine stage (11) which has at least one rotary shaft (111), wherein
- the method provides overload protection for the rotary shaft, - for the overload protection of the rotary shaft, a torsional stress in the rotary shaft during operation of the rotary shaft is sensed,
- in order to sense the torsional stress in the rotary shaft (111), a torque of the rotary shaft (111) is measured and
- in order to measure the torque of the rotary shaft (111) a contactless measurement method is carried out,
**characterized in that**
- the contactless measurement method is carried out with the aid of at least one magnetoelastic torque sensor (121) and
- for the overload protection of the rotary shaft (111) the following method steps are carried out:
a) prediction of a development of the torque of the rotary shaft (111) using the measured torque of the rotary shaft (111), and
b) changing of at least one operating parameter of the turbomachine stage (11) using the prediction.

2. Method according to Claim 1, wherein
- a multistage turbomachine having at least one further turbomachine stage (12) is used as the turbomachine (1), said further turbomachine stage (12) having at least one further rotary shaft (121),
- the method provides overload protection for the further rotary shaft, and,
- for the overload protection of the further rotary shaft, a further torsional stress in the further rotary shaft during operation of the further rotary shaft is sensed.

3. Method according to Claim 1 or 2, wherein, in order to sense the torsional stress in the further rotary shaft (121), a further torque of the further rotary shaft (121) is measured.

4. Method according to Claim 3, wherein, for the overload protection of the further rotary shaft (121) of the further turbomachine stages (12), the following further method steps are carried out:
a') further prediction of a development of the further torque of the further rotary shaft (111) using the measured further torque of the further rotary shaft (121), and
b') further changing of at least one further operating parameter of the further turbomachine stage (12) using the further prediction.

5. Method according to one of Claims 1 to 4, wherein a volumetric flow rate at the turbomachine stage of a fluid with which the turbomachine stage is operated, and/or a torque with which the rotary shaft of the turbomachine stage is driven, are/is used as the operating parameter and/or as the further operating parameter.

6. Method according to one of Claims 1 to 5, wherein the turbomachine (1) is selected from the group consisting of gas turbine, steam turbine, turbocharger, pump, compressor and hydro turbine.

7. Turbomachine (1) having at least one turbomachine stage (11) which has at least one rotary shaft (111), wherein
- the turbomachine has at least one device for sensing a torsional stress in the rotary shaft during operation of the rotary shaft, and
- the device for sensing the torsional stress in the rotary shaft has a contactless torque sensor which is arranged at the rotary shaft (111),
**characterized in that**
- the turbomachine (1) is suitable for carrying out the method according to one of Claims 1 to 6, and
- the contactless torque sensor is a magnetoelastic torque sensor.

8. Turbomachine according to Claim 7, wherein the turbomachine (1) has at least one further turbomachine stage (12) having at least one further rotary shaft (121).

9. Turbomachine according to Claim 8, wherein a further torque sensor (122) for measuring the further torque of the further rotary shaft (121) is arranged at the further rotary shaft (121).

10. Turbomachine according to Claim 9, wherein the further torque sensor (122) is a further contactless torque sensor and the further contactless torque sensor is a further magnetoelastic torque sensor.

11. Turbomachine according to one of Claims 8 to 10, wherein the turbomachine (1) is selected from the group consisting of gas turbine, steam turbine, turbocharger, pump, compressor and hydro turbine.

## Revendications

1. Procédé d'exploitation d'une turbomachine (1) comprenant au moins un étage de turbomachine (11) qui comporte au moins un arbre rotatif (111), dans lequel
- le procédé procure une protection de l'arbre rotatif contre les surcharges,
- pour protéger l'arbre rotatif contre les surcharges, il est procédé à la détection d'une contrainte de torsion de l'arbre rotatif pendant le fonctionnement de l'arbre rotatif,
- pour détecter la contrainte de torsion de l'arbre rotatif (111), une mesure d'un couple de l'arbre rotatif (111) est réalisée, et
- pour mesurer le couple de l'arbre rotatif (111), un procédé de mesure sans contact est mis en œuvre, **caractérisé en ce que**
- le procédé de mesure sans contact est exécuté à l'aide d'au moins un capteur de couple magnéto-élastique (121) et, pour protéger l'arbre rotatif (111) contre les surcharges, les étapes de procédé suivantes sont exécutées :
a) prédiction d'un développement du couple de l'arbre rotatif (111) sur la base du couple mesuré de l'arbre rotatif (111), et
b) modification d'au moins un paramètre de fonctionnement de l'étage de turbomachine (11) sur la base de la prédiction.

2. Procédé selon la revendication 1, dans lequel
- une turbomachine multi-étages comprenant au moins un étage de turbomachine supplémentaire (12) qui comporte au moins un arbre rotatif supplémentaire (121) est utilisée en tant que turbomachine (1),
- le procédé procure une protection de l'arbre rotatif supplémentaire contre les surcharges, et
- pour protéger l'arbre rotatif supplémentaire contre les surcharges, il est procédé à la détection d'une contrainte de torsion supplémentaire de l'arbre rotatif supplémentaire pendant le fonctionnement de l'arbre rotatif supplémentaire.

3. Procédé selon la revendication 1 ou 2, dans lequel, pour détecter la contrainte de torsion de l'arbre rotatif supplémentaire (121), une mesure d'un couple supplémentaire de l'arbre rotatif supplémentaire (121) est réalisée.

4. Procédé selon la revendication 3, dans lequel, pour protéger l'arbre rotatif supplémentaire (121) de l'étage de turbomachine supplémentaire (12) contre les surcharges, les étapes de procédé supplémentaires suivantes sont exécutées :
a') prédiction supplémentaire d'un développement du couple supplémentaire de l'arbre rotatif supplémentaire (111) sur la base du couple supplémentaire mesuré de l'arbre rotatif supplémentaire (121), et
b') modification supplémentaire d'au moins un paramètre de fonctionnement supplémentaire de l'étage de turbomachine supplémentaire (12) sur la base de la prédiction supplémentaire.

5. Procédé selon l'une des revendication 1 à 4, dans lequel on utilise, en tant que paramètre de fonctionnement et/ou de paramètre de fonctionnement supplémentaire, un débit-volume, appliqué à l'étage de turbomachine, d'un fluide qui sert au fonctionnement de l'étage de turbomachine et/ou une vitesse de rotation à laquelle l'arbre rotatif de l'étage de turbomachine est entraîné.

6. Procédé selon l'une des revendications 1 à 5, dans lequel la turbomachine (1) est choisie dans le groupe comprenant une turbine à gaz, une turbine à vapeur, un turbocompresseur, une pompe, un compresseur et une turbine hydraulique.

7. Turbomachine (1) comprenant au moins un étage de turbomachine (11) qui comporte au moins un arbre rotatif (111), dans laquelle
- la turbomachine comprend au moins un dispositif permettant la détection d'une contrainte de torsion de l'arbre rotatif pendant le fonctionnement de l'arbre rotatif, et
- le dispositif de détection de la contrainte de torsion de l'arbre rotatif comprend un capteur de couple sans contact qui est situé sur l'arbre rotatif (111), **caractérisée en ce que**
- la turbomachine (1) est adaptée à l'exécution du procédé selon l'une des revendications 1 à 6, et
- le capteur de couple sans contact est un capteur de couple magnéto-élastique.

8. Turbomachine selon la revendication 7, dans laquelle la turbomachine (1) comprend au moins un étage de turbomachine supplémentaire (12) comportant au moins un arbre rotatif supplémentaire (121).

9. Turbomachine selon la revendication 8, dans laquelle un capteur de couple supplémentaire (122) destiné à la mesure du couple supplémentaire de l'arbre rotatif supplémentaire (121) est situé sur l'arbre rotatif supplémentaire (121).

10. Turbomachine selon la revendication 9, dans laquelle le capteur de couple supplémentaire (122) est un capteur de couple sans contact supplémentaire et le capteur de couple sans contact supplémentaire est un capteur de couple magnéto-élastique supplémentaire.

11. Turbomachine selon l'une des revendications 8 à 10, dans laquelle la turbomachine (1) est choisie dans le groupe comprenant une turbine à gaz, une turbine à vapeur, un turbocompresseur, une pompe, un compresseur et une turbine hydraulique.
